# EUROPEAN PATENT APPLICATION

(11) **EP 2 793 191 A2**
(43) Date of publication of application: **22.10.2014**
(21) Application number: 14155555.7
(22) Date of filing: 18.02.2014
(51) Int. Cl.: G06T 7/20

(54) **Method of generating a spatial and spectral object model**

(30) Priority: 18.04.2013 US 201313865935
(71) Applicant: GE Aviation Systems LLC, Grand Rapids, MI 49512-1991 (US)
(72) Inventor: Buehler, Eric Daniel, Grand Rapids, MI Michigan 49512 (US); Occhipinti, Benjamin Thomas, Grand Rapids, MI Michigan 49512 (US)
(74) Representative: Williams, Andrew Richard

(57) **Abstract**

A method (100) of improving a spectral reflectance profile of an object (212,310) using a hyperspectral imaging device includes, among other things, obtaining (102) a series of hyperspectral images of the object where there is relative motion between the object and the hyperspectral imaging device; determining (104) one or more parameters of the relative motion; mapping the parameters to determine (106) an orientation of the object in each hyperspectral image in the series; identifying (108) two or more spatial portions of the object in each hyperspectral image in the series; assigning (110) a spectral signature to each spatial portion; and generating (112) a multi-dimensional spectral reflectance profile from the orientation, the spatial portions, and the spectral signatures.

## Description

### BACKGROUND OF THE INVENTION

Hyperspectral cameras are capable of capturing hyperspectral image frames, or datacubes at video frame rates. These cameras acquire high spatial and spectral resolution imagery. In combination with techniques relating to computer vision and spectral analysis, operators of hyperspectral cameras have engaged in surveillance applications relating to detection, tracking and identification of imaged objects.

### BRIEF DESCRIPTION OF THE INVENTION

One aspect of the invention relates to a method of improving a spectral reflectance profile of an object using a hyperspectral imaging device. The method comprises obtaining a series of hyperspectral images of the object wherein there is relative motion between the object and the hyperspectral imaging device; determining at least one parameter of the relative motion; mapping the at least one parameter to determine an orientation of the object in each hyperspectral image in the series; identifying at least two spatial portions of the object in each hyperspectral image in the series; assigning a spectral signature to each spatial portion; and generating a multi-dimensional spectral reflectance profile from the orientation, the at least two spatial portions, and the spectral signatures.

### BRIEF DESCRIPTION OF THE DRAWINGS

In the drawings:
FIG. 1 is a flowchart showing a method of generating a spatial and spectral object model according to an embodiment of the invention.
FIG. 2 shows a scenario where two exemplary moving platforms capture hyperspectral imagery of a vehicle.
FIG. 3 shows a scenario where an exemplary platform captures hyperspectral imagery of a moving vehicle.
FIG. 4 demonstrates the spatial portioning of an imaged vehicle used to generate a spectral reflectance profile.

### DESCRIPTION OF EMBODIMENTS OF THE INVENTION

In the background and the following description, for the purposes of explanation, numerous specific details are set forth in order to provide a thorough understanding of the technology described herein. It will be evident to one skilled in the art, however, that the exemplary embodiments may be practiced without these specific details. In other instances, structures and devices are shown in diagram form in order to facilitate description of the exemplary embodiments.

The exemplary embodiments are described with reference to the drawings. These drawings illustrate certain details of specific embodiments that implement a module, method, or computer program product described herein. However, the drawings should not be construed as imposing any limitations that may be present in the drawings. The method and computer program product may be provided on any machine-readable media for accomplishing their operations. The embodiments may be implemented using an existing computer processor, or by a special purpose computer processor incorporated for this or another purpose, or by a hardwired system.

As noted above, embodiments described herein may include a computer program product comprising machine-readable media for carrying or having machine-executable instructions or data structures stored thereon. Such machine-readable media can be any available media, which can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium that can be used to carry or store desired program code in the form of machine-executable instructions or data structures and that can be accessed by a general purpose or special purpose computer or other machine with a processor. When information is transferred or provided over a network or another communication connection (either hardwired, wireless, or a combination of hardwired or wireless) to a machine, the machine properly views the connection as a machine-readable medium. Thus, any such a connection is properly termed a machine-readable medium. Combinations of the above are also included within the scope of machine-readable media. Machine-executable instructions comprise, for example, instructions and data, which cause a general purpose computer, special purpose computer, or special purpose processing machines to perform a certain function or group of functions.

Embodiments will be described in the general context of method steps that may be implemented in one embodiment by a program product including machine-executable instructions, such as program codes, for example, in the form of program modules executed by machines in networked environments. Generally, program modules include routines, programs, objects, components, data structures, etc. that have the technical effect of performing particular tasks or implement particular abstract data types. Machine-executable instructions, associated data structures, and program modules represent examples of program codes for executing steps of the method disclosed herein. The particular sequence of such executable instructions or associated data structures represent examples of corresponding acts for implementing the functions described in such steps.

Embodiments may be practiced in a networked environment using logical connections to one or more remote computers having processors. Logical connections may include a local area network (LAN) and a wide area network (WAN) that are presented here by way of example and not limitation. Such networking environments are commonplace in office-wide or enterprise-wide computer networks, intranets and the internet and may use a wide variety of different communication protocols. Those skilled in the art will appreciate that such network computing environments will typically encompass many types of computer system configurations, including personal computers, hand-held devices, multiprocessor systems, microprocessor-based or programmable consumer electronics, network PCs, minicomputers, mainframe computers, and the like.

Embodiments may also be practiced in distributed computing environments where tasks are performed by local and remote processing devices that are linked (either by hardwired links, wireless links, or by a combination of hardwired or wireless links) through a communication network. In a distributed computing environment, program modules may be located in both local and remote memory storage devices.

An exemplary system for implementing the overall or portions of the exemplary embodiments might include a general purpose computing device in the form of a computer, including a processing unit, a system memory, and a system bus, that couples various system components including the system memory to the processing unit. The system memory may include read only memory (ROM) and random access memory (RAM). The computer may also include a magnetic hard disk drive for reading from and writing to a magnetic hard disk, a magnetic disk drive for reading from or writing to a removable magnetic disk, and an optical disk drive for reading from or writing to a removable optical disk such as a CD-ROM or other optical media. The drives and their associated machine-readable media provide nonvolatile storage of machine-executable instructions, data structures, program modules and other data for the computer.

Beneficial effects of the method disclosed in the embodiments include increasing the utility and performance of remote imaging systems for object detection, tracking and identification. A hyperspectral tracking system implementing a multi-dimensional spectral reflectance profile generated by the method of the current invention may robustly mitigate false positives and false negatives that typically occur during reacquisition or object signature prediction. For example, fusion of the multi-dimensional spectral reflectance profile with spatial tracking techniques will reduce errors in traditional spatial tracking due to occlusions. The multi-dimensional spectral reflectance profile provides a profile of the life characteristics of an imaged object of interest. From this profile, operators of hyperspectral tracking systems may characterize and infer properties of the object including: how the object moves, what the object looks like when it moves, how big the object is, how opposing sides of the object differ, etc.

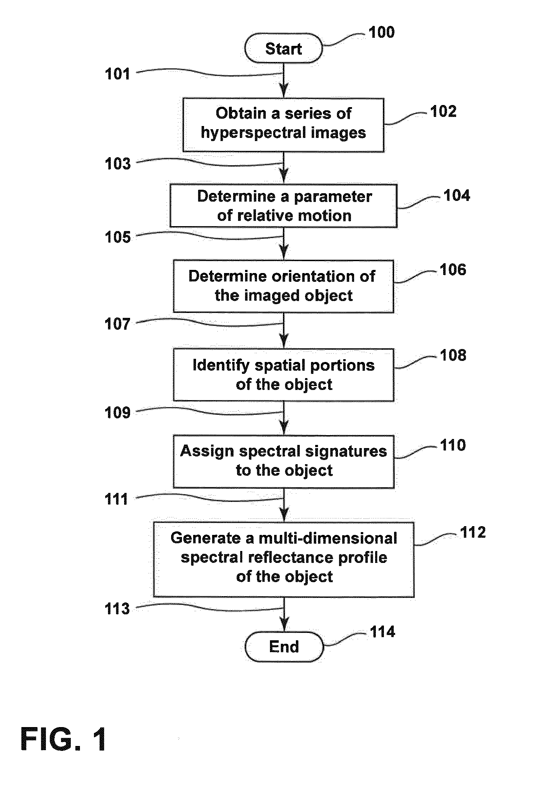

FIG. 1 is a flowchart showing a method of generating a spatial and spectral object model according to an embodiment of the invention. Initially at step 100, a hyperspectral imaging device 101 may acquire and track an object of interest by capturing imagery that is both spatially and spectrally resolved. A hyperspectral imaging device 101 may preferably be a staring array hyperspectral video camera. However, other known hyperspectral imaging devices 101 may include a combination staring array color/panchromatic camera with a fast scanning spectral camera.

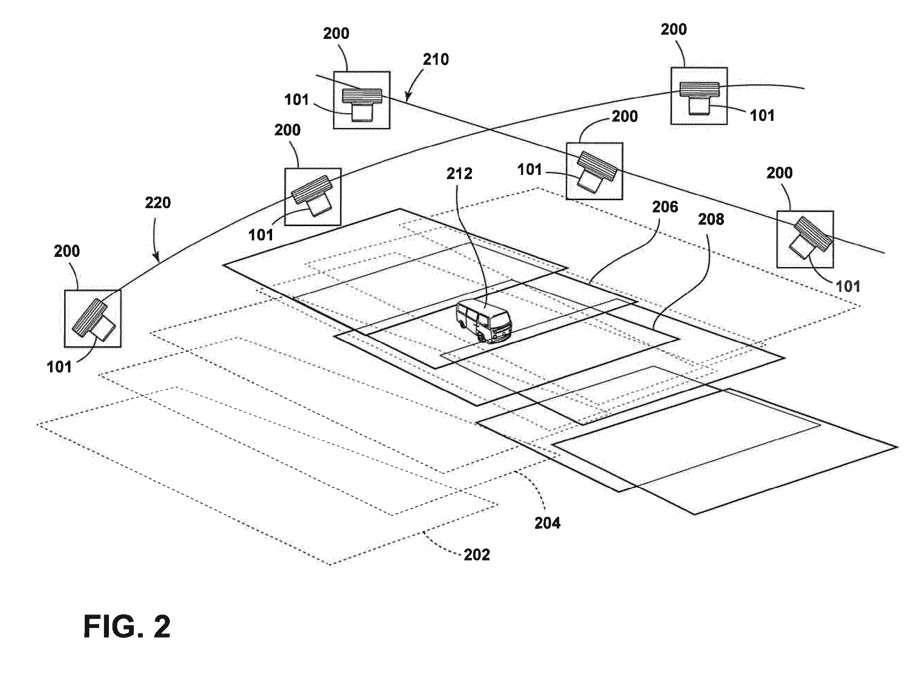

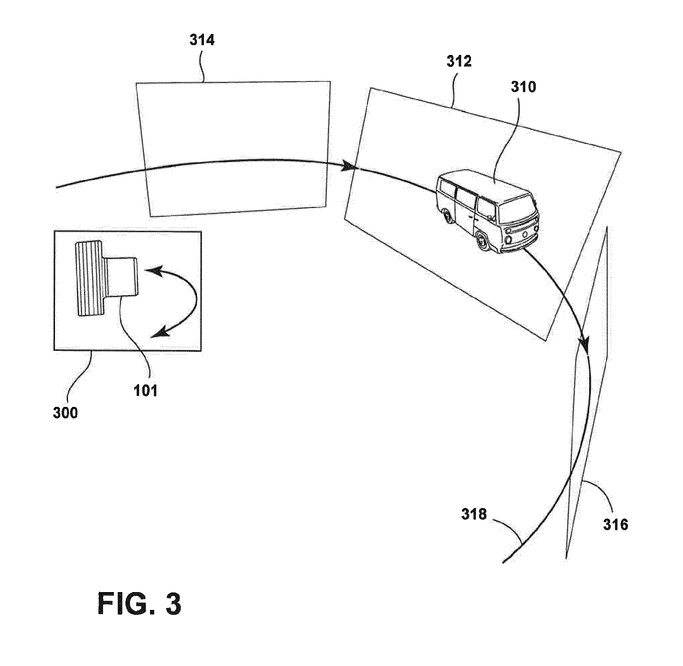

The hyperspectral imaging device 101 may, for example, be stationary on a mobile platform 200 or movable on a stationary platform 300, or any combination thereof. On a movable platform 200, as shown for example in FIG. 2, the hyperspectral imaging device 101 may image an object of interest 212 where the footprint of the imaged area 202, 204, 206, 208 moves, in part, as a consequence of the movement of the platform 200. The movement of the platform may be an arc 220 traversed by the hyperspectral imaging device 101, a line 210 traversed by hyperspectral imaging device 101, or any motion dictated by the operability of the platform 200. On a stationary platform 300, as shown for example in FIG. 3, the hyperspectral imaging device 101 may move by rotation in a single axis on the platform 300 to track and image an object of interest 310. In this case, the imaged footprint 312, 314, 316 follows an arc 318 to image the object of interest 310. In most cases the object of interest 310 would not follow the same arc 318 of the footprint, in which case the perspective of the footprint will change. As well, the object of interest 212, 310 may be stationary or mobile. It will be apparent that relative motion between the hyperspectral imaging device 101 and the imaged object of interest 212, 310 will change the perspective between the hyperspectral imaging device 101 and the object of interest 212, 310. Consequently, the observed spectral reflectance of the object of interest 212, 310 will vary, at least in part, as a function of the changing relative perspective.

Referring again to FIG. 1, at step 102, a hyperspectral imaging device 101 may obtain a series of hyperspectral images 103. A processor, onboard the platform, may perform a processing of the series of hyperspectral images 103 or may instruct transmittal of the series of hyperspectral images 103 to a remote location for processing by a second processor or processing system (collectively termed "a processor"). To determine alignment among the hyperspectral images 103 in the series, the processor may employ image stability techniques to shift the series of hyperspectral images 103 from frame-to-frame to counteract motion and jitter that may have been introduced, for example, by movement of the platform. The series of hyperspectral images 103 of the object may have a relative motion between the object of interest 212, 310 and the hyperspectral imaging device 101.

At step 104, the processor may determine at least one parameter 105 of relative motion between the object of interest 212, 310 and the hyperspectral imaging device 101. For example, the processor may use data from an onboard sensor positioning system that measures relative and absolute positioning. Example onboard systems may include relative positioning systems like inertial navigation systems in combination with absolute positioning systems like GPS. Along with the onboard positioning data, the processor may ascertain differences in the series of hyperspectral images 103 to infer motion of the object of interest 212, 310 and estimate a range from the hyperspectral imaging device 101 to the object of interest 212, 310. The processor may determine relative motion as rotational (i.e. roll, pitch, yaw) and translational (i.e. x, y, z) changes between the hyperspectral imaging device 101 and the object of interest 212, 310. The processor may parameterize the relative motion with Euler angles and direction vectors. Other parameterizations of the relative motion between the hyperspectral imaging device 101 and the object of interest 212, 310 may apply depending upon the implementation. The processor may map the parameter 105 of the relative motion between the object 212, 310 and the hyperspectral imaging device 101 to determine an orientation 107 of the object 212, 310 in each hyperspectral image in the series at step 106.

Upon determination of an orientation 107 of the object of interest 212, 310 in each of the series of hyperspectral images 103, the processor at step 108 may identify spatial portions 109 of the object of interest 212, 310 in each of the series of hyperspectral images 103. Then, at step 110, the processor may assign a spectral signature 111 to each spatial portion 109 of the object of interest 212, 310 in each of the series of hyperspectral images 103. Based on the assignment of a spectral signature 111 to a spatial portion 109 of the object of interest 212, 310, the processor may generate, at step 112, a multi-dimensional spectral reflectance profile 113. The dimensionality of the spectral reflectance profile 113 is determined by the orientation 107 of the object 212, 310, the spatial portions 109, and the spectral signatures 111 associated with the spatial portions 109. Therefore, the multi-dimensional spectral reflectance profile 113 may describe both the spectral reflectance signatures 111 of an object of interest 212, 310 and the spatial relationships among the spectral reflectance signatures 111 along with a spatial, or geometrical, description of the object.

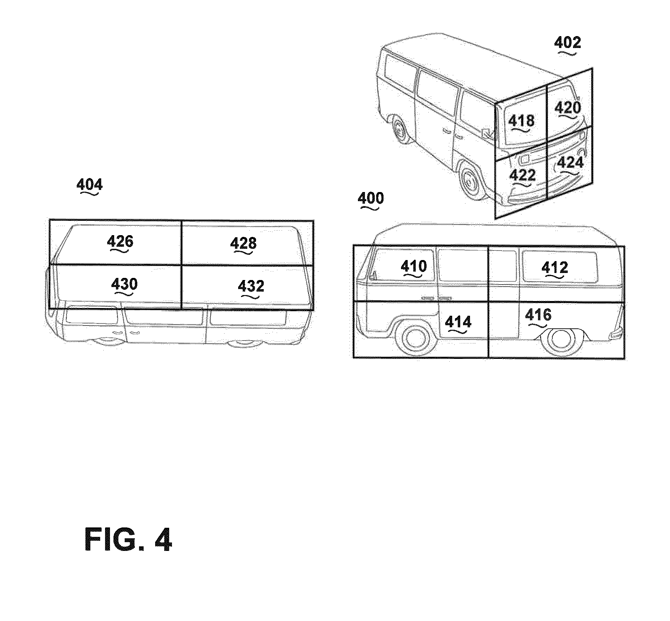

To illustrate, FIG. 4 demonstrates the spatial portioning of an imaged vehicle 212 or 310 for three different orientations 400, 402, 404. For a first imaged side of the vehicle at orientation 400, the processor identifies four spatial portions 410, 412, 414, 416. For a second imaged side of the vehicle at orientation 402, the processor identifies four spatial portions 418, 420, 422, 424. For a third imaged side of the vehicle at orientation 404, the processor identifies four spatial portions 426, 428, 430, 432. The processor then assigns a spectral signature based on the hyperspectral imagery to each of the spatial portions. In this example, there will be four distinct spectral signatures for each of the three imaged orientations for a total of 12 distinct spectral signatures. Therefore, in this illustration, the multi-dimensional spectral reflectance profile 113 comprises three orientations, each with four spatial portions 109 and each spatial portion with one corresponding spectral reflectance signature 111.

Returning to FIG. 1, once the multi-dimensional spectral reflectance profile 113 is generated, the processor may classify the object of interest 212, 310 in the series of hyperspectral images 103. The multi-dimensional spectral reflectance profile 113 encodes a description of the spatial dimensions and spectral textures of the object of interest 212, 310. The processor may implement additional processing techniques to determine the size and shape, along with texture characteristics, of the spatial portions 109 of the object of interest 212, 310.

Upon completion of the method at step 114, the hyperspectral imaging device 101 may reacquire the object of interest 212, 310 in successive series of hyperspectral images 103. The processor may improve the multi-dimensional spectral reflectance profile 113 of the object based upon the successive collections of hyperspectral imagery. While initial passes may result in unobserved orientations of the object, successive passes may begin to fill in the model of the multi-dimensional spectral reflectance profile 113 for the previously unobserved orientations.

Conversely, the processor may improve the multi-dimensional spectral reflectance profile 113 for previously observed orientations. When the processor reacquires an object at a previously observed orientation, the processor may update a previously generated multi-dimensional spectral reflectance profile 113 by weighting the spectral signature 111 based upon the integration time of the hyperspectral image. For example, if a given spatial portion 109 for a given orientation 107 has been previously observed for 0.1 seconds to determine a spectral signature 111 and then an additional measurement is made for 0.2 seconds, the spectral signature 111 for the spatial portion 109 for the orientation 107 in the multi-dimensional spectral reflectance profile 113 may be adjusted to weight the new measurement twice as heavily as the old measurement.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (100) of improving a spectral reflectance profile of an object (212,310) using a hyperspectral imaging device (101), comprising:
obtaining (102) a series of hyperspectral images of the object (213,310) wherein there is relative motion between the object and the hyperspectral imaging device;
determining (104) at least one parameter of the relative motion;
mapping the at least one parameter to determine (106) an orientation of the object in each hyperspectral image in the series;
identifying (108) at least two spatial portions of the object in each hyperspectral image in the series;
assigning a (110) spectral signature to each spatial portion; and
generating (112) a multi-dimensional spectral reflectance profile from the orientation, the at least two spatial portions, and the spectral signatures.

2. The method (100) of claim 1, where the step of generating (112) a multi-dimensional spectral reflectance profile includes the step of determining the size and shape of the at least two spatial portions.

3. The method (100) of either of claim 1 or 2, where the step of generating (112) the multi-dimensional spectral reflectance profile includes:
updating a previously generated multi-dimensional spectral reflectance profile; and
weighting the spectral signature based upon the integration time of the hyperspectral image.

4. The method (100) of any preceding claim, where the hyperspectral imaging device (101) is stationary and the object is in motion.

5. The method (100) of any of claims 1 to 3, where the hyperspectral imaging device (101) is in motion and the object is stationary.

6. The method (100) of any of claims 1 to 3, where the hyperspectral imaging device and the object are in motion.

7. The method (100) of any preceding claim, where the at least one parameter comprises Euler angles.

8. The method (100) of any preceding claim, where the at least one parameter comprises direction vectors.

9. The method (100) of any preceding claim, further including the step of classifying the object in the series of hyperspectral images based on the multi-dimensional spectral reflectance profile.

10. The method (100) of any preceding claim, further including the step of reacquiring the object in a successive series of hyperspectral images based on the multi-dimensional spectral reflectance profile.
